Europäisches Patentamt

European Patent Office

Office européen des brevets

(19)

(11) Veröffentlichungsnummer : **0 415 967 B1**

(12) **EUROPÄISCHE PATENTSCHRIFT**

(45) Veröffentlichungstag der Patentschrift :
13.11.91 Patentblatt 91/46

(51) Int. Cl.$^5$ : **B62D 5/06**, B62D 6/02

(21) Anmeldenummer : 89905657.6

(22) Anmeldetag : 25.04.89

(86) Internationale Anmeldenummer :
PCT/EP89/00449

(87) Internationale Veröffentlichungsnummer :
**WO 89/10289 02.11.89 Gazette 89/26**

(54) STEUEREINRICHTUNG FÜR EINE HILFSKRAFTLENKUNG.

(30) Priorität : 30.04.88 DE 3814688

(43) Veröffentlichungstag der Anmeldung :
13.03.91 Patentblatt 91/11

(45) Bekanntmachung des Hinweises auf die
Patenterteilung :
13.11.91 Patentblatt 91/46

(84) Benannte Vertragsstaaten :
DE FR IT SE

(56) Entgegenhaltungen :
EP-A- 0 164 842
EP-A- 0 194 927
DE-A- 2 906 047

(73) Patentinhaber : ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder : MERZ, Johann
Robert Koch Weg 8
W-7070 Schwäbisch Gmünd (DE)

EP 0 415 967 B1

# Beschreibung

Die Erfindung betrifft eine Steuereinrichtung nach dem Oberbegriff des Patentanspruches 1. Eine derartige Steuereinrichtung ist z.B. aus der DE-A-2906047 bekannt.

Man verwendet derartige Steuereinrichtungen hauptsächlich in Personenkraftwagen, mit denen sich der Lenkkraftaufwand in Abhängigkeit von der Fahrgeschwindigkeit verändern läßt. Bei niedriger Fahrgeschwindigkeit ist eine starke Lenkkraftunterstützung erwünscht, so daß der Fahrer nur eine geringe Handkraft aufbringen muß. Bei hohen Fahrgeschwindigkeiten soll dagegen die Lenkkraftunterstützung nur noch gering sein, wodurch sich ein besserer Straßenkontakt erzielen läßt. Diese Eigenschaften kann man dadurch erreichen, indem man die Durchflußmenge durch eine Verstelldrossel entsprechend dem geschwindigkeitsabhängigen Eingangssignal eines Steuergerätes kontinuierlich regelt.

Aus der DE-A-29 06 047 ist es bereits bekannt, eine Steuereinheit in die Zulaufleitung zu einer Hilfskraftlenkung einzubauen. Die Steuereinheit umfaßt hauptsächlich ein gestuftes Nadelventil (Verstelldrossel), das mehr oder weniger in eine Steueröffnung eintauchen und auf diese Weise den Druckölstrom zur Hilfskraftlenkung steuern kann. Als Stellgerät dient ein Elektromagnet, der das Nadelventil so verstellt, daß mit steigender Fahrgeschwindigkeit der Durchströmquerschnitt der Steueröffnung immer enger wird und damit auch der in der Hilfskraftlenkung bereitgestellte Ölstrom immer mehr abnimmt. Auf diese Weise läßt sich die Lenkkraftunterstützung bei hoher Fahrgeschwindigkeit so weit zurücknehmen, daß die Lenkung den für die Fahrsicherheit wichtigen Fahrbahnkontakt vermitteln kann. Mit einer derartigen Konzeption sinkt jedoch bei höherer Fahrgeschwindigkeit die Lenkgeschwindigkeit ab. Die Lenkgeschwindigkeit reicht zwar für die dann üblichen kleineren Lenkbewegungen voll aus, jedoch nicht für eine Schrecksituation, in der z. B. in schneller Fahrt ein auf der Fahrbahn liegendes Hindernis anfahren werden soll.

Der Erfindung liegt daher die Aufgabe zugrunde, die Lenksicherheit einer mit einer elektrischen Volumenstromregelung arbeitenden Hilfskraftlenkung, insbesondere bei höheren Fahrgeschwindigkeiten, zu verbessern.

Nach der Erfindung läßt sich diese Aufgabe durch die Merkmale des Anspruchs 1 lösen.

Die an die Pumpe angeschlossene Zulaufleitung enthält zwischen der Verstelldrossel und dem Lenkventil einen Druckschalter. Dieser Druckschalter erzeugt ein weiteres Steuersignal zur Beeinflussung der Verstelldrossel. Bei einem plötzlichen Druckabfall in der Zulaufleitung, infolge einer schnellen Lenkbewegung, gibt der Druckschalter einen Steuerbefehl zum öffnen der Verstelldrossel. Der Druckschalter kann so geschaltet sein, daß er einen Steuerbefehl zur öffnen in das Schaltgerät eingibt, welches daraufhin ein entsprechendes Steuersignal an die Verstelldrossel weiterleitet. - Nach einer Variante kann man auch die das fahrgeschwindigkeitsabhängige Steuersignal übermittelnde Steuerleitung über den Druckschalter zur Verstelldrossel führen. Unterbricht der Druckschalter diesen Stromkreis zur Verstelldrossel, dann öffnet letztere ihren Durchlaufquerschnitt. Die Variante hat den Vorteil, daß man kein zusätzliches Steuersignal in das Schaltgerät eingeben muß. Das Steuergerät ist daher einfacher.

Der Volumenstrom zur Hilfskraftlenkung läßt sich also auch in einer kritischen Fahrsituation, die ein schnelles Ausweichmanöver erforderlich macht, auf einen höheren Wert regeln. Da man außer dem Druckschalter und der zugehörigen Leitung zum Schaltgerät keine weiteren Bauteile benötigt, läßt sich die verbesserte Steuereinrichtung sehr preisgünstig herstellen.

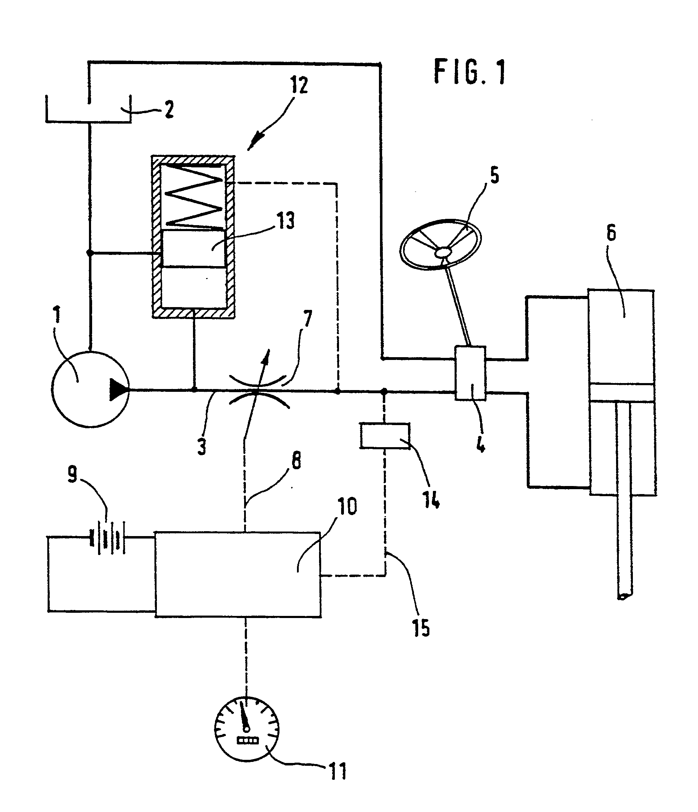

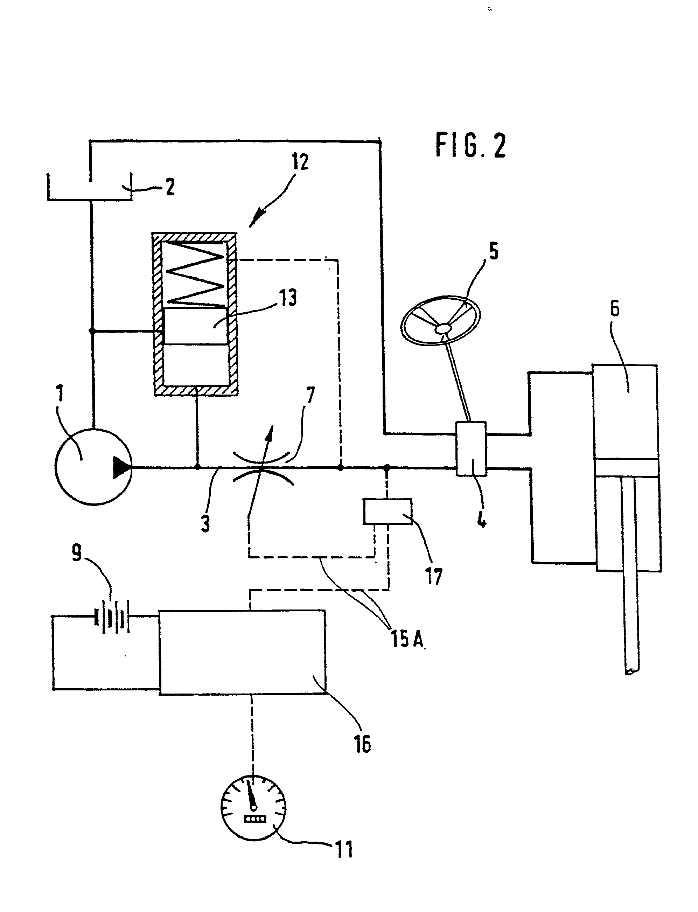

Die Zeichnung zeigt in Fig. 1 und 2 im Schema zwei Ausführungsbeispiele der Erfindung:

In Fig. 1 fördert eine Hochdruckpumpe 1 Drucköl aus einem. Tank 2 über eine Zulaufleitung 3 zu einem Lenkventil 4. Das Lenkventil 4 läßt sich in Abhängigkeit eines Lenkhandrades 5 in den beiden Lenkrichtungen verstellen und steuert einen mit einem. Lenkgestänge verbundenen Servomotor 6. In der Zulaufleitung 3 sitzt eine durch einen Elektromagnet betätigbare Verstelldrossel 7, die über eine Steuerleitung 8 mit einem von einer Fahrzeugbatterie 9 gespeisten Schaltgerät 10 (elektronischer Baustein) verbunder ist. Das Schaltgerät 10 erhält z. B. von einem Tachometer 11 ein fahrgeschwindigkeitsabhängiges Steuersignal. Mit steigender Fahrgeschwindigkeit regelt das Schaltgerät 10 den Durchflußquerschnitt durch die Verstelldrossel 7 immer stärker ab. Die Zulaufleitung 3 steht außerdem noch mit einem Stromteilventil 12 in Verbindung. Auf die Vorderseite eines Kolbens 13 des Stromteilventils 12 wirkt der Druck vor der Verstelldrossel ein, während der Druck stromabwärts der Verstelldrossel 7 eine federbelastete Rückseite des Kolbens 13 beaufschlagt. Durch den Differenzdruck läßt sich in bekannter Weise mit steigender Pumpendrehzahl ein Teil des Förderstromes über die Vorderseite des Kolbens 13 zum Tank 2 abregeln.

Nach der Erfindung enthält die Zulaufleitung 3 zwischen der Verstelldrossel 7 und dem Lenkventil 4 einen Druckschalter 14. Der Druckschalter 14 steht über eine elektrische Steuerleitung 15 mit dem Schaltgerät 10 in Verbindung. Bei schneller Fahrt regelt das Schaltgerät 10 den Volumenstrom zur Hilfskraftlenkung an der Verstelldrossel 7 auf einen kleinen Wert. Durch Verringerung des Strömungsquerschnitts in der Verstelldrossel 7 steigt der Druck auf die Vorderseite des Kolbens 13 geringfügig an, so daß ein verhältnismäßig großer Teilstrom zum Tank 2 abfließt. Der Differenzdruck an der Drossel bleibt dabei weitgehend gleich. Die Lenkkraftunterstützung ist in diesem Falle sehr gering. Führt der Fahrer infolge eines plötzlich auf der Fahrbahn auftauchenden Hindernisses eine schnelle Lenkbewegung aus, so benötigt man einen höheren Volumenstrom, um mit der hierzu notwendigen Geschwindigkeit lenken zu können. Durch das schnelle Lenken sinkt der Druck in der Zulaufleitung 3 unter den Durchlaufdruck (etwa 3 bis 4 bar) ab. Der Druckschalter 14 gibt daraufhin ein Steuersignal an das Schaltgerät 10 ab, welches die Verstelldrossel 7 auf den höheren Volumenstrom regelt. Der Lenkvorgang läßt sich durch die höhere Kraftunterstützung mit der notwendigen Geschwindigkeit sicher ausführen.

Im Ausführungsbeispiel nach Fig. 2 steuert ein Schaltgerät 16 die Verstelldrossel 7 über einen Druckschalter 17 an. Unterbricht der Druckschalter 17 den Stromkreis infolge eines Druckabfalls in der Zulaufleitung 3, so öffnet die Verstelldrossel 7 den vollen Strömungsquerschnitt.

Steigt der Druck in der Zulaufleitung 3 wieder über den Durchlaufdruck an, dann stellt der Druckschalter die Verbindung vom Schaltgerät 16 zur Verstelldrossel 7 über die elektrische Steuerleitung 15A wieder her. Die Verstelldrossel 7 erhält daraufhin die vom Schaltgerät 16 im Normalfall abgegebenen, geschwindigkeitsabhängigen Steuersignale.

Bezugszeichen.

| | |
|---|---|
| 1 | Hochdruckpumpe |
| 2 | Tank |
| 3 | Zulaufleitung |
| 4 | Lenkventil |
| 5 | Lenkhandrad |
| 6 | Servomotor |
| 7 | Verstelldrossel |
| 8 | Steuerleitung |
| 9 | Fahrzeugbatterie |
| 10 | Schaltgerät |
| 11 | Tachometer |
| 12 | Stromteilventil |
| 13 | kolben von 12 |
| 14 | Druckschalter |
| 15 | Steuerleitung |
| 15A | Steuerleitung |
| 16 | Schaltgerät |
| 17 | Druckschalter |

## Patentansprüche

Steuereinrichtung für eine Hilfskraftlenkung für Kraftfahrzeuge mit folgenden Merkmalen:
- es ist ein durch ein Lenkhandra (5) verstellbares und an eine Pumpe (1) angeschlossenes Lenkventil (4) vorhanden;
- das Lenkventil (4) steuert einen mit den gelenkten Rädern verbundenen Servomoto (6);
- in die Zulaufleitung der Pumpe ist eine an ein Steuergerät(10) angeschlossene, als magnetventil ausgeführte Verstelldrossel (7) eingebaut;
- das Steuergerät erhält ein Geschwindigkeitssignal, welches den Durchlaufquerschnitt der Verstelldrossel (7) mit steigender Fahrgeschwindigkeit verkleinert,

dadurch **gekennzeichnet**, daß die Zulaufleitung (3) zwischen der Verstelldrossel (7) und dem Lenkventil (4) einen Druckschalter (14) enthält, der ein weiteres Steuersignal zur Beeinflussung der Verstelldrossel (7) erzeugt, derart, daß sich bei einem plötzlichen Druckabfall in der Lenkeinrichtung (4, 6) der Volumenstrom durch weites öffnen der Verstelldrossel (7) erhöht.

2. Steuereinrichtung nach Anspruch 1, dadurch **gekennzeichnet**, daß der Druckschalter (14) über eine Steuerleitung (15) mit dem Schaltgerät (10) verbunden ist (Fig. 1).

3. Steuereinrichtung nach Anspruch 1, dadurch **gekennzeichnet**, daß eine Steuerleitung (15A) vom Schaltgerät (10) über einen Druckschalter (17) zur Verstelldrossel (7) führt (Fig. 2).

## Claims

1. A control device for a power-assisted steering system for motor vehicles, having the following features:
- it includes a steering control valve (4) which is adjustable by means of a manual steering wheel (5) and which is connected to a pump (1);
- the steering control valve (4) controls a servo motor (6) which is connected to the steered wheels;
- a variable throttle (7) in the form of a solenoid valve and which is connected to a control unit (10) is incorporated in the feed line to the pump;
- the control unit receives a speed signal which reduces the flow aperture area of the variable throttle (7) as road speed increases,

characterised in that the feed line (3) between the variable throttle (7) and the steering control valve (4) includes a pressure switch (14) which generates a further control signal to influence the variable throttle (7) in such a way that the fluid flow is increased in the event of a sudden fall in pressure in the steering device (4, 6) by the variable throttle (7) being opened wide,

2. A control device according to claim 1, characterised in that the pressure switch (14) is connected with the switching device (10) via a control line (15) (Fig. 1).

3. A control device according to claim 1, characterised in that a control lead (15A) leads from the switching device (10) to the variable throttle (7) via a pressure switch (17) (Fig. 2),

**Revendications**

1. Dispositif de commande d'une servodirection pour véhicules à moteur, dans lequel :
- il y a une soupape de direction (4) agencée pour être commandée par un volant à main (5) et raccordée à une pompe (1):
  - la soupape de direction (4) commande un servomoteur (6) relié aux roues directrices;
  - la conduite d'alimentation venant de la pompe est pourvue d'un étranglement réglable (7) raccordé à un appareil de commande (10) et constitué par une électrovanne;
  - l'appareil de commande reçoit un signal de vitesse qui réduit la section de passage de l'étranglement réglable (7) quand la vitesse de marche augmente,

caractérisé en ce que la conduite d'alimentation (3) comporte, entre l'étranglement réglable (7) et la soupape de direction (4), un détecteur de pression (14) qui produit un signal de commande supplémentaire pour agir sur l'étranglement réglable (7) de manière à augmenter le débit en ouvrant largement l'étranglement (7) en cas de brusque chute de pression dans la direction (4,6).

2. Dispositif de commande selon la revendication 1, caractérisé en ce que le détecteur de pression (14) est raccordé à l'appareil de commande (10) par une ligne de commande (15) (Fig. 1).

3. Dispositif de commande selon la revendication 1, caractérisé en ce qu'une ligne de commande (15A) va de l'appareil de commande (10) à l'étranglement réglable (7) via un détecteur de pression (17) (Fig. 2).

FIG. 1

FIG. 2